(19) Europäisches Patentamt
European Patent Office
Office européen des brevets

(11) EP 3 492 511 A1

(12) EUROPEAN PATENT APPLICATION
published in accordance with Art. 153(4) EPC

(43) Date of publication:
**05.06.2019 Bulletin 2019/23**

(21) Application number: **17834249.9**

(22) Date of filing: **24.07.2017**

(51) Int Cl.:
***C08G 69/26*** *(2006.01)* ***B29C 67/00*** *(2017.01)*
***B33Y 10/00*** *(2015.01)* ***B33Y 70/00*** *(2015.01)*

(86) International application number:
**PCT/JP2017/026700**

(87) International publication number:
**WO 2018/021243 (01.02.2018 Gazette 2018/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.07.2016 JP 2016148336**
**20.07.2017 JP 2017141095**

(71) Applicant: **Kao Corporation**
**Chuo-Ku**
**Tokyo 103-8210 (JP)**

(72) Inventors:
- **HIRAI,Jouji**
**Wakayama-shi**
**Wakayama 640-8580 (JP)**
- **YOSHIMURA,Tadanori**
**Wakayama-shi**
**Wakayama 640-8580 (JP)**

(74) Representative: **Hoffmann Eitle**
**Patent- und Rechtsanwälte PartmbB**
**Arabellastraße 30**
**81925 München (DE)**

# (54) FUSIBLE MATERIAL FOR THREE-DIMENSIONAL MOLDING

(57) The soluble material for three-dimensional modeling according to the present invention is a soluble material for three-dimensional modeling that is used as a material of a support material that supports a three-dimensional object when manufacturing the three-dimensional object with a 3D printer of an FDM system, in which the soluble material for three-dimensional modeling contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of the hydrophilic monomer unit A to a total amount of monomer units in the polyamide resin is 2.5 mol% or more and less than 13.5 mol%. The present invention provides a soluble material for three-dimensional modeling which is used for a support material, and which is suitable for the production of a three-dimensional object by use of an FDM system and has moisture absorption resistance while the material is large in dissolution rate into any neutral water and removable speedily from a precursor of the three-dimensional object without using any aqueous strong alkaline solution.



Printed by Jouve, 75001 PARIS (FR)

## Description

### TECHNICAL FIELD

The present invention relates to a soluble material for three-dimensional modeling that is used as a material of a support material that supports a three-dimensional object when manufacturing the three-dimensional object with a 3D printer, especially a fused deposition modeling type 3D printer.

### BACKGROUND ART

The 3D printer is one type of rapid prototyping, and it is a three-dimensional printer for modeling a three-dimensional object based on 3D data such as 3D CAD and 3D CG. Systems of 3D printing have been known, such as a fused deposition modeling system (hereinafter referred to as an FDM system), an inkjet ultraviolet curing system, a stereolithography system, and a selective laser sintering system. Among these systems, the FDM system is a modeling system of heat-melting, extruding, and laminating polymer filaments to obtain a three-dimensional object, and the FDM system does not use a reaction of the material unlike other systems. Accordingly, a 3D printer of an FDM system is small and inexpensive, and has become popular in recent years as an apparatus with less post-processing. In order to model a three-dimensional object having a more complex shape in a FDM system, a modeling material constituting the three-dimensional object and a support material for supporting a three-dimensional structure of the modeling material are laminated to obtain a precursor of the three-dimensional object, and then the support material is removed from the precursor of the three-dimensional object to obtain the target three-dimensional object.

An example of the method of removing the support material from the precursor of the three-dimensional object is a method of using a methacrylic acid copolymer as the support material and soaking the precursor of the three-dimensional object in an high temperature aqueous strong alkaline solution to remove the support material (for example, JP-T-2012-509777). The method utilizes that carboxylic acid in the methacrylic acid copolymer is neutralized by an alkali and dissolved in an aqueous strong alkaline solution.

### SUMMARY of the Invention

The soluble material for three-dimensional modeling according to the present invention is a soluble material for three-dimensional modeling that is used as a material of a support material that supports a three-dimensional object when manufacturing the three-dimensional object with a 3D printer of an FDM system, in which the soluble material for three-dimensional modeling contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of the hydrophilic monomer unit A to a total amount of monomer units in the polyamide resin is 2.5 mol% or more and less than 13.5 mol%.

The method for manufacturing a three-dimensional object according to the present invention is a method for manufacturing a three-dimensional object with an FDM system having a step of obtaining a precursor of a three-dimensional object containing the three-dimensional object and a support material and a support material removing step of making the precursor of the three-dimensional object contact neutral water to remove the support material, in which a material of the support material is the soluble material for three-dimensional modeling.

The support material according to the present invention is a support material that supports a three-dimensional object when manufacturing the three-dimensional object with a 3D printer of an FDM system, in which the support material contains a polyamide resin, the polyamide resin has a hydrophilic monomer unit A having a hydrophilic group, a hydrophobic dicarboxylic acid monomer unit B, and a hydrophobic diamine monomer unit C; and a ratio of an amount of hydrophilic monomer unit A to a total amount of monomer units in the polyamide resin is 2.5 mol% or more and less than 13.5 mol%.

### DETAILED DESCRIPTION OF THE INVENTION

In the case of using, as a support material, the methacrylic acid copolymer disclosed in the document JP-A-2012-509777, an aqueous strong alkaline solution needs to be used to remove the support material from a precursor of a three-dimensional object. However, this aqueous strong alkaline solution is large in danger for people and in load onto the environment. Moreover, when a precursor of the three-dimensional object is immersed in the aqueous strong alkaline solution for a long term, the three-dimensional object in the precursor of the three-dimensional object tends to be eroded by the alkali. Thus, restrictions have been given to the use of any polyester resin, such as polylactic acid (PLA), which is low in resistance against alkalines, as a raw material of the three-dimensional object. Thus, support materials have been required which are removable not by any aqueous strong alkaline solution but by a neutral water

having a pH of 6 to 8.

Against this problem, the document JP-A-2002-516346 discloses a method of using polyvinyl alcohol, which is soluble in water, as a support material, and immersing a precursor of a three-dimensional object in water, so as to remove the support material therein. According to the method described in this document JP-A-2002-516346, the support material in the precursor of the three-dimensional object can be removed without using any aqueous strong alkaline solution. However, polyvinyl alcohol, which is contained in the soluble material for three-dimensional modeling, is high in affinity with water. Thus, when the soluble material for three-dimensional modeling, which contains polyvinyl alcohol, is exposed to a high humidity, this polymer absorbs water in the air. When the soluble material for three-dimensional modeling, which contains polyvinyl alcohol containing the water and further contains others, is heated, melted, printed out and laminated, using a 3D printer of an FDM system, the water is vaporized and scattered by high temperature so that the soluble material is foamed. Consequently, the precision of the resultant three-dimensional object is remarkably damaged.

The present invention provides a soluble material for three-dimensional modeling which is used for a support material, and which is suitable for the production of a three-dimensional object by use of an FDM system and has moisture absorption resistance while the material is large in dissolution rate into any neutral water and removable speedily from a precursor of the three-dimensional object without using any aqueous strong alkaline solution.

The present invention provides a three-dimensional object producing method which makes it possible to restrain a support material from being foamed even when this method is used to produce a three-dimensional object, using a 3D printer after the support material is exposed to a high humidity, so that the three-dimensional object can be restrained from being lowered in precision, and which makes it possible to remove the support material, which is large in dissolution rate in any neutral water, speedily from a precursor of the three-dimensional object without using any aqueous strong alkaline solution.

The present invention provides a support material which can be restrained from being foamed even when this support material is used to produce a three-dimensional object, using a 3D printer after the support material is exposed to a high humidity, so that the three-dimensional object can be restrained from being lowered in precision, and which is large in dissolution rate in any neutral water to be removable speedily from a precursor of the three-dimensional object without using any aqueous strong alkaline solution.

The soluble material for three-dimensional modeling according to the present invention is a soluble material for three-dimensional modeling that is used as a material of a support material that supports a three-dimensional object when manufacturing the three-dimensional object with a 3D printer of an FDM system, in which the soluble material for three-dimensional modeling contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of the hydrophilic monomer unit A to a total amount of monomer units in the polyamide resin is 2.5 mol% or more and less than 13.5 mol%.

The method for manufacturing a three-dimensional object according to the present invention is a method for manufacturing a three-dimensional object with an FDM system having a step of obtaining a precursor of a three-dimensional object containing the three-dimensional object and a support material and a support material removing step of making the precursor of the three-dimensional object contact neutral water to remove the support material, in which a material of the support material is the soluble material for three-dimensional modeling.

The support material according to the present invention is a support material that supports a three-dimensional object when manufacturing the three-dimensional object with a 3D printer of an FDM system, in which the support material contains a polyamide resin, the polyamide resin has a hydrophilic monomer unit A having a hydrophilic group, a hydrophobic dicarboxylic acid monomer unit B, and a hydrophobic diamine monomer unit C; and a ratio of an amount of hydrophilic monomer unit A to a total amount of monomer units in the polyamide resin is 2.5 mol% or more and less than 13.5 mol%.

The present invention provides a soluble material for three-dimensional modeling for removing a support material that is suitable for the production of a three-dimensional object with a FDM system, has a large dissolution speed into neutral water while having moisture absorption resistance, and can be quickly removed from a precursor of a three-dimensional object without using a strong alkaline aqueous solution.

The present invention provides a method for manufacturing a three-dimensional object that is capable of suppressing foaming and a decrease of the accuracy of a three-dimensional object even when being used in manufacture of a three-dimensional object with a 3D printer after being exposed to high humidity, has a large dissolution speed into neutral water while having moisture absorption resistance, and can quickly remove a support material from a precursor of a three-dimensional object without using a strong alkaline aqueous solution.

The present invention provides a support material that is capable of suppressing foaming and a decrease of the accuracy of a three-dimensional object even when being used in manufacture of a three-dimensional object with a 3D printer after being exposed to high humidity, has a large dissolution speed into neutral water while having moisture absorption resistance, and can be quickly removed from a precursor of a three-dimensional object without using a strong

alkaline aqueous solution.

Hereinafter, an embodiment of the present invention will be described.

<Soluble Material for Three-Dimensional Modeling>

The soluble material for three-dimensional modeling according to the present embodiment is a soluble material for three-dimensional modeling that is used as a material of a support material that supports a three-dimensional object when manufacturing the three-dimensional object with a 3D printer of an FDM system, in which the soluble material for three-dimensional modeling contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of the hydrophilic monomer unit A to a total amount of monomer units in the polyamide resin is 2.5 mol% or more and less than 13.5 mol%.

A support material made of a raw material that is the above-mentioned soluble material for three-dimensional modeling has moisture absorption resistance, and is large in rate of dissolution into any neutral water. Thus, this support material is speedily removable from a precursor of a three-dimensional object without using any aqueous strong alkaline solution. The reason why this soluble material for three-dimensional modeling has such advantageous effects is unclear. However, the reason would be as follows:

Because the soluble material for three-dimensional modeling according to the present embodiment has a polyamide resin having a specific amount of the hydrophilic monomer unit A, the soluble material for three-dimensional modeling has high solubility into neutral water. Because the polyamide resin also has the hydrophobic dicarboxylic acid monomer unit B, the moisture absorption is low. Because the soluble material for three-dimensional modeling has such a polyamide resin, it is considered that a support material containing the soluble material for three-dimensional modeling has a large dissolution speed into neutral water while having moisture absorption resistance and can be quickly removed from a precursor of a three-dimensional object without using a strong alkaline aqueous solution.

<Polyamide Resin>

(Hydrophilic Monomer Unit A)

The polyamide resin has a hydrophilic monomer unit A having a hydrophilic group. The hydrophilic monomer unit A is not particularly limited as long as it is a monomer unit having a hydrophilic group. A monomer for deriving the hydrophilic monomer unit A is also referred to as a monomer A.

From a viewpoint of the solubility into neutral water and a viewpoint of the easiness of the polymerization when producing the polyamide resin, examples of the hydrophilic group are at least one type selected from the group consisting of a primary amino group, a secondary amino group, a tertiary amino group, a quaternary ammonium salt group, an oxyethylene group, a hydroxyl group, a carboxyl group, a carboxyl salt group, a phosphoric acid group, a phosphate group, a sulfonic acid group, and a sulfonate group.

From a viewpoint of the solubility into neutral water and a viewpoint of the easiness of the polymerization when producing the polyamide resin, the secondary amino group is preferably at least one type selected from the group consisting of a secondary amino group represented by $-NHR^1$ ($R^1$ represents a straight chain or branched alkyl group having 1 to 14 carbon atoms) and a secondary amino group represented by -NH-.

From a viewpoint of the solubility into neutral water and a viewpoint of the easiness of the polymerization when producing the polyamide resin, the tertiary amino group is preferably at least one type selected from the group consisting of a tertiary amino group represented by $-NR^2R^3$ ($R^2$ represents a straight chain or branched alkyl group having 1 to 4 carbon atoms and $R^3$ represents a straight chain or branched alkyl group having 1 to 14 carbon atoms) and a tertiary amino group represented by $-NR^4-$ ($R^4$ represents a straight chain or branched alkyl group having 1 to 4 carbon atoms).

From a viewpoint of the solubility into neutral water and a viewpoint of the easiness of the polymerization when producing the polyamide resin, the quaternary ammonium salt group is preferably at least one type selected from the group consisting of a quaternary ammonium salt group represented by $-N^+\{R^5R^6R^7\}$. $X^-$ (Each of $R^5$, $R^6$, and $R^7$ represents a hydrogen atom or an alkyl group having 1 to 14 carbon atoms and $X^-$ represents a hydroxy ion, a halogen ion, $CH_3SO_4^-$, or $CH_3CH_2SO_4^-$).

From a viewpoint of the solubility into neutral water and a viewpoint of the easiness of the polymerization when producing the polyamide resin, the oxyethylene group is preferably at least one type selected from the group consisting of an oxyethylene group represented by $-\{CH_2CH_2O\}_n-$ (n represents an average number and it is an integer of 1 to 2,500, preferably 2 to 1,000, more preferably 3 to 100, and further preferably 4 to 50) and an oxyethylene group represented by $-\{CH_2CH_2O\}_m-R^8$ (m represents an average number and it is an integer of 1 to 2,500, preferably 2 to 1,000, more preferably 3 to 100, and further preferably 4 to 50. $R^8$ represents a hydrogen atom or a straight chain or branched alkyl group having 1 to 10 carbon atoms and it is more preferably 2 to 6 and further preferably 3 to 5).

From a viewpoint of the solubility into neutral water and a viewpoint of the easiness of the polymerization when producing the polyamide resin, the carboxyl salt group is preferably a carboxyl salt group represented by $-COOM^1$ ($M^1$ represents a counterion of a carboxyl group constituting the carboxyl salt group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyamide resin, the phosphate group is preferably at least one type selected from the group consisting of a phosphate group represented by $-PO_4M^2_2$, $-PO_4HM^2$, and $-PO_4M^2$ ($M^2$ represents a counterion of a phosphoric acid group constituting the phosphate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyamide resin, the sulfonate group is preferably a sulfonate group represented by $-SO_3M^3$ ($M^3$ represents a counterion of a sulfonic acid group constituting the sulfonate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water, a viewpoint of moisture absorption resistance, a viewpoint of heat resistance required for modeling by a 3D printer, and a viewpoint of the easiness of the polymerization when producing the polyamide resin, the monomer A is preferably at least one type selected from the group consisting of carboxylic acid, amine, and amino acid, and more preferably carboxylic acid. Among the type of carboxylic acid, from the same viewpoints, aromatic carboxylic acid is preferable; and at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid are more preferable. Among those, from the same viewpoints, at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2,6-naphthalene dicarboxylic acid are preferable; at least one type selected from the group consisting of 5-sulfoisophthalic acid and 2-sulfoterephthalic acid are more preferable; and 5-sulfoisophthalic acid is further preferable.

From a viewpoint of the solubility into neutral water, the content of the hydrophilic group in the polyamide resin is preferably 0.5 mmol/g or more, more preferably 0.6 mmol/g or more, and further preferably 0.7 mmol/g or more; and from a viewpoint of moisture absorption resistance, and a viewpoint of heat resistance required for modeling by a 3D printer, it is preferably less than 1.0 mmol/g, more preferably 0.8 mmol/g or less, and further preferably 0.75 mmol/g or less. Herein, the content of the hydrophilic group is measured by the method described in the examples.

From a viewpoint of the solubility into neutral water, the ratio of the amount of the hydrophilic monomer unit A to the total amount of monomer units in the polyamide resin is 2.5 mol% or more, preferably 4 mol% or more, more preferably 6 mol% or more, further preferably 8 mol% or more, and further more preferably 10 mol% or more; and from a viewpoint of moisture absorption resistance and from a viewpoint of heat resistance required for modeling by a 3D printer, it is less than 13.5 mol%, preferably 11.5 mol% or less, more preferably 10.0 mol% or less, and further preferably 9.5 mol% or less. Herein, a composition of monomer units in the polyamide resin is measured by the method described in the examples.

[Hydrophobic Dicarboxylic Acid Monomer Unit B]

The polyamide resin has a hydrophobic dicarboxylic acid monomer unit B. The dicarboxylic acid monomer unit B does not have a hydrophilic group. In the present specification, dicarboxylic acid for deriving the hydrophobic dicarboxylic acid monomer unit B is also referred to as dicarboxylic acid B.

The dicarboxylic acid B is not particularly limited as long as it is dicarboxylic acid. However, from a viewpoint of the solubility into neutral water, a viewpoint of moisture absorption resistance, a viewpoint of heat resistance required for modeling by a 3D printer, and a viewpoint of the easiness of the polymerization when producing the polyamide resin, the dicarboxylic acid B is preferably at least one type selected from the group consisting of aromatic dicarboxylic acid,

aliphatic dicarboxylic acid, and alicyclic dicarboxylic acid. Among these, from the same viewpoints, at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid are more preferable; and at least one type selected from the group consisting of terephthalic acid, 2,5-furan dicarboxylic acid, and 2,6-naphthalene dicarboxylic acid are further preferable; terephthalic acid is further more preferable.

From a viewpoint of moisture absorption resistance, the ratio of the amount of the hydrophobic dicarboxylic acid monomer unit B in the polyamide resin to the total amount of monomer units in the polyamide resin is preferably 10 mol% or more, more preferably 20 mol% or more, further preferably 30 mol% or more, further more preferably 35 mol% or more, especially preferably 40 mol% or more, and more especially preferably 42 mol% or more; and from a viewpoint of the solubility into neutral water, it is preferably 47.5 mol% or less, more preferably 45 mol% or less, further preferably 42 mol% or less, and further more preferably 40 mol% or less. From the viewpoint of moisture absorption resistance and the viewpoint of the solubility into neutral water, the ratio of the amount of the hydrophobic dicarboxylic acid monomer unit B in the polyamide resin to the total amount of monomer units in the polyamide resin is preferably 10 mol% to 47.5 mol%, more preferably 20 mol% to 45 mol%, and further preferably 30 mol% to 42 mol%.

From the viewpoints of the solubility into neutral water, moisture absorption resistance, and heat resistance required for modeling by a 3D printer, the mole ratio of the hydrophilic monomer unit A to the hydrophobic dicarboxylic acid monomer unit B (hydrophilic monomer unit A / hydrophobic dicarboxylic acid monomer unit B) is preferably 10/90 or more, more preferably 15/85 or more, further preferably 18/82 or more, and further more preferably 20/80 or more; and from the same viewpoints, it is preferably less than 27/73, more preferably 25/75 or less, and further preferably 21/79 or less.

[Hydrophobic Diamine Monomer Unit C]

The polyamide resin has a hydrophobic diamine monomer unit C. The hydrophobic diamine monomer unit C does not have a hydrophilic group. The diamine for deriving the hydrophobic diamine monomer unit C is also referred to as diamine C.

The diamine C is not particularly limited, and at least one type selected from the group consisting of aliphatic diamine, alicyclic diamine, and aromatic diamine can be used. However, from a viewpoint of the easiness of the polymerization when producing the polyamide resin, the diamine C is preferably aliphatic diamine.

From the viewpoints of the solubility into neutral water, moisture absorption resistance, heat resistance required for modeling by a 3D printer, and easiness of the polymerization when producing the polyamide resin, the number of carbon atoms in the diamine C is preferably 2 or more, more preferably 3 or more, and further preferably 4 or more; and from the viewpoints of the solubility into neutral water, moisture absorption resistance, and heat resistance required for modeling by a 3D printer, it is preferably 20 or less, more preferably 15 or less, and further preferably 10 or less.

Examples of the aliphatic diamine include ethylenediamine, trimethylenediamine, tetramethylenediamine, pentamethylenediamine, hexamethylenediamine, heptamethylenediamine, octamethylenediamine, nonanediamine, and decanediamine. Among these, from the viewpoints of the solubility into neutral water, moisture absorption resistance, and toughness (strength) required for modeling by a 3D printer, hexamethylenediamine is preferable.

Examples of the alicyclic diamine include 4,4'-diamino-3,3'-dimethyldicyclohexylmethane, diamine cyclohexane, and isophoronediamine. Among these, from the viewpoints of the solubility into neutral water, moisture absorption resistance, and toughness (strength) required for modeling by a 3D printer, at least one type selected from the group consisting of diaminecyclohexane and isophoronediamine is preferable and diaminecyclohexane is more preferable.

Examples of the aromatic diamine include phenylene diamine, diethyltoluenediamine, and 4,4'-diaminophenylmethane. Among these, from the viewpoints of the solubility into neutral water, moisture absorption resistance, and toughness (strength) required for modeling by a 3D printer, at least one type selected from the group consisting of phenylene diamine and diethyltoluenediamine is preferable and phenylenediamine is more preferable.

From the viewpoints of the solubility into neutral water, moisture absorption resistance, and toughness (strength) required for modeling by a 3D printer, the diamine C is preferably at least one type selected from the group consisting of hexamethylenediamine, diaminecyclohexane, and phenylenediamine, more preferably at least one type selected from the group consisting of hexamethylenediamine and phenylenediamine, and further preferably hexamethylene diamine.

If the diamine C is at least one type selected from the group consisting of hexamethylenediamine, diaminecyclohexane, and phenylenediamine; from the viewpoints of the solubility into neutral water, moisture absorption resistance, and heat resistance required for modeling by a 3D printer; the ratio of the total amount of hexamethylenediamine, diaminecyclohexane, and phenylenediamine to the total amount of all diamine monomer units in the polyamide resin is preferably 50 mol% or more, more preferably 70 mol% or more, further preferably 80 mol% or more, further more preferably 90 mol% or more, especially preferably substantially 100 mol%, and more especially preferably 100 mol%. "Substantially 100 mol%" means that a case is included in which substances other than hexamethylenediamine, diaminecyclohexane, and phenylenediamine are inevitably mixed in the diamine C.

Examples of the polyamide resin can be shown in the following formulas (1) to (6).

[Formula 1]

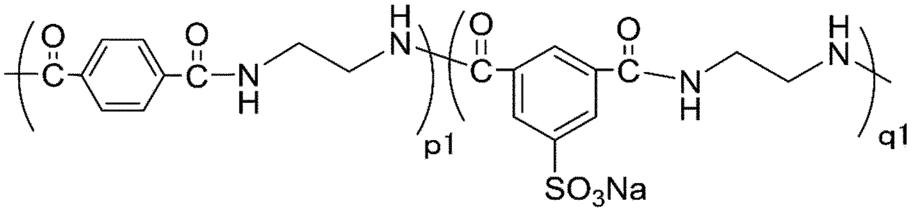

(1)

(In the formula (1), p1 and q1 represent the number-average degree of polymerization respectively. The polymer may be a block copolymer or a random copolymer; and from a viewpoint of the solubility into neutral water, the polymer is preferably a random copolymer.)

[Formula 2]

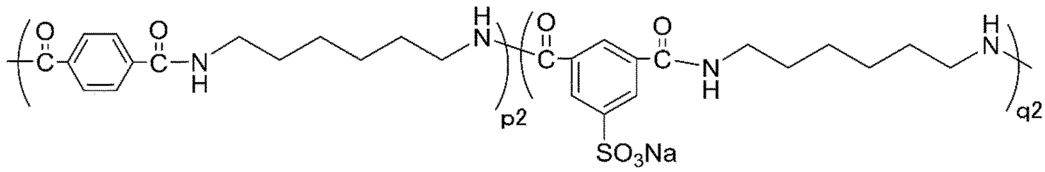

(2)

(In the formula (2), p2 and q2 represent the number-average degree of polymerization respectively. The polymer may be a block copolymer or a random copolymer; and from a viewpoint of the solubility into neutral water, the polymer is preferably a random copolymer.)

[Formula 3]

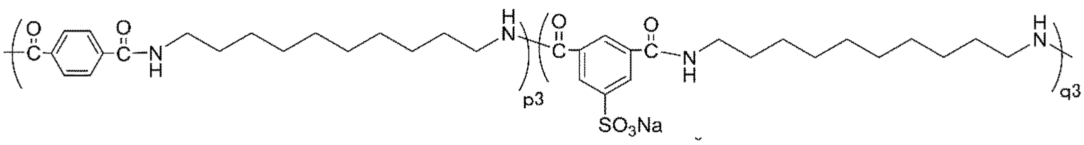

(3)

(In the formula (3), p3 and q3 represent the number-average degree of polymerization respectively. The polymer may be a block copolymer or a random copolymer; and from a viewpoint of the solubility into neutral water, the polymer is preferably a random copolymer.)

[Formula 4]

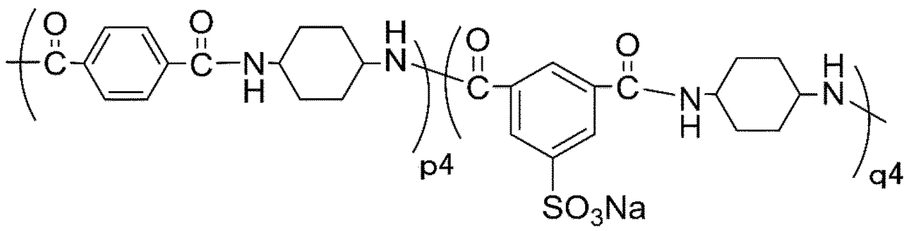

(4)

(In the formula (4), p4 and q4 represent the number-average degree of polymerization respectively. The polymer may be a block copolymer or a random copolymer; and from a viewpoint of the solubility into neutral water, the polymer is preferably a random copolymer.)

[Formula 5]

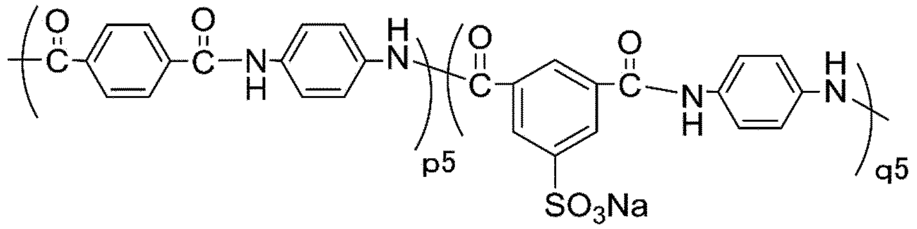 (5)

(In the formula (5), p5 and q5 represent the number-average degree of polymerization respectively. The polymer may be a block copolymer or a random copolymer; and from a viewpoint of the solubility into neutral water, the polymer is preferably a random copolymer.)

[Formula 6]

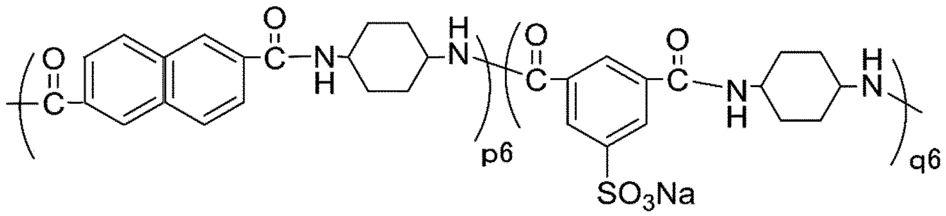 (6)

(In the formula (6), p6 and q6 represent the number-average degree of polymerization respectively. The polymer may be a block copolymer or a random copolymer; and from a viewpoint of the solubility into neutral water, the polymer is preferably a random copolymer.)

From a viewpoint of improving the toughness required for a soluble material for three-dimensional modeling, the weight average molecular weight of the polyamide resin is preferably 3,000 or more, more preferably 3,500 or more, further preferably 4,000 or more; and from the viewpoints of solubility into neutral water and the modeling property by a 3D printer, the weight average molecular weight of the polyamide resin is preferably 70,000 or less, more preferably 50,000 or less, further preferably 30,000 or less, and further more preferably 20,000 or less. In the present specification, the weight average molecular weight is obtained with a method described in the example.

From a viewpoint of the modeling property by a 3D printer, the glass transition temperature of the polyamide resin is preferably 50°C or higher, more preferably 60°C or higher, further preferably 70°C or higher, and further more preferably 80°C or higher; and from the same viewpoint, the glass transition temperature of the polyamide resin is preferably 250°C or lower, and more preferably 220°C or lower. In the present specification, the glass transition temperature is obtained with a method described in the example.

The polyamide resin may have monomer unit other than the monomer unit A, the dicarboxylic acid monomer unit B, and diamine monomer unit C as long as the effect of the present embodiment is not impaired.

The method for manufacturing the polyamide resin is not particularly limited and a conventionally known method for manufacturing a polyamide resin can be applied.

The content of the polyamide resin in the soluble material for three-dimensional modeling can be adjusted in a range where the effects of the present embodiment are not deteriorated; however, from the viewpoints of the solubility in any neutral water, the moisture absorption resistance, and the heat resistance required for modeling by a 3D printer, the content is preferably 30% by mass or more, more preferably 50% by mass or more, further preferably 60% by mass or more, even more preferably 70% by mass or more, even more preferably 80% by mass or more, even more preferably 90% by mass or more, even more preferably 95% by mass or more, even more preferably substantially 100% by mass, and even more preferably 100% by mass. "Substantially 100 mol%" means that a case is included in which substances other than the polyamide resin is inevitably mixed in the soluble material for three-dimensional modeling.

From a viewpoint of the modeling property by a 3D printer, the glass transition temperature of the soluble material for three-dimensional modeling is preferably 50°C or higher, more preferably 60°C or higher, further preferably 70°C or higher, and further more preferably 80°C or higher; and from the same viewpoint, the glass transition temperature of the soluble material for three-dimensional modeling is preferably 250°C or lower, and more preferably 220°C or lower.

The form of the soluble material for three-dimensional modeling is not particularly limited, and examples of the form include a pellet, powder, and a filament. However, from a viewpoint of the modeling property by a 3D printer, a

filament is preferable.

From a viewpoint of the modeling property by a 3D printer and a viewpoint of improving the modeling accuracy of a three-dimensional object, the diameter of the filament is preferably 0.5 mm or more, and more preferably 1.0 mm or more; from the same viewpoints, the diameter of the filament is preferably 3.0 mm or less, more preferably 2.0 mm or less, and further preferably 1.8 mm or less. From a viewpoint of enhancing the toughness, a drawing process is preferably performed to produce a filament. From a viewpoint of improving the toughness while maintaining solubility, the draw ratio is preferably 1.5 times or more, more preferably 2 times or more, further preferably 3 times or more, further more preferably 5 times or more; and from the same viewpoint, the draw ratio is preferably 200 times or less, more preferably 150 times or less, further preferably 100 times or less, and further more preferably 50 times or less. The drawing temperature is preferably in a range of a temperature from 20°C lower than the glass transition temperature of the soluble material for three-dimensional modeling to 110°C higher than the glass transition temperature. From a viewpoint of improving the toughness and a viewpoint of thermal stability, the lower limit of the drawing temperature is more preferably 10°C lower than the glass transition temperature, and further preferably same as the glass transition temperature. From the same viewpoints, the upper limit of the drawing temperature is more preferably 110°C higher than the glass transition temperature, further preferably 100°C higher than the glass transition temperature, and further more preferably 90°C higher than the glass transition temperature. The drawing may be performed while air cooling when the resin is discharged from the extruder or the resin may be heated by hot air or a laser. The drawing may be performed in one stage to a prescribed filament diameter at a prescribed draw ratio or multiple stages to a prescribed filament diameter at a prescribed draw ratio.

The soluble material for three-dimensional modeling may include a polymer other than any polyamide resin in order to be heightened in physical properties as far as the advantageous effects of the present embodiment are not damaged. Examples of the polymer include water-soluble polymers such as polyvinyl alcohol, polyethylene glycol, poly(ethylene glycol/propylene glycol), carboxymethylcellulose, and starch; hydrophobic polymers such as polymethyl methacrylate; elastomers such as any polyetherester, polyetheresteramide and polyurethane that are each composed of hard segments and soft segments, block copolymers each made from an ionic monomer or water-soluble nonionic monomer, and a hydrophobic monomer, and other thermoplastic elastomers each made from styrene and butadiene, or an alkyl methacrylate (having 1 to 18 carbon atoms) and an alkyl acrylate (having 1 to 18 carbon atoms); graft polymers such as any graft polymer obtained by grafting a hydrophobic rubber with polyacrylic acid, N,N-dimethylacrylamide or some other polymer, and any graft polymer obtained by grafting a silicone with polyoxazoline or N,N-dimethylacrylamide; copolymers each obtained by copolymerizing ethylene or an alkyl acrylate (having 1 to 18 carbon atoms) with a monomer having a carboxyl group, such as acrylic acid or methacrylic acid, with a monomer having an epoxy group, such as glycidyl methacrylate, or with a monomer having an amide group, such as N,N-dimethylacrylamide; and impact modifiers such as acrylic rubber, and natural rubber latex.

When the soluble material for three-dimensional modeling includes the polymer other than any polyamide resin, the soluble material for three-dimensional modeling may include a compatibilizer to heighten the affinity and compatibility between this polymer and the polyamide resin to improve performances of the soluble material for three-dimensional modeling or improve the toughness of the filament related to the soluble material for three-dimensional modeling. Examples of the compatibilizer include (i) copolymers each made from a monomer having a glycidyl group, isocyanato group, epoxy group, or oxazoline group, and/or a monomer having an acid anhydride structure, such as maleic anhydride, and, e.g., an alkyl acrylate or methacrylate, ethylene, propylene or vinyl acetate; (ii) block copolymers each composed of two or more polymers selected from the following: polyester, polyamide, and polymers/copolymers each made from one or more selected from acrylic acid, methacrylic acid, any alkyl acrylate or methacrylate, acrylamide, N,N-dimethylacrylamide, ethylene, propylene, butadiene, isoprene, vinyl acetate, ethylene glycol, and propylene glycol; (iii) graft copolymers each composed of two or more polymers selected from the following: polyester, polyamide, and copolymers each composed of two or more polymers selected from the following: polyester, polyamide, and polymers/copolymers each made from one or more selected from acrylic acid, methacrylic acid, any alkyl acrylate or methacrylate, acrylamide, N,N-dimethylacrylamide, ethylene, propylene, butadiene, isoprene, vinyl acetate, ethylene glycol, and propylene glycol; and (iv) surfactants.

The soluble material for three-dimensional modeling may include a component different from the above-mentioned components as far as the advantageous effects of the present embodiment are not damaged. Examples of the different component include polyamide resin other than the above-mentioned polyamide resin, polymers other than any polyamide resin, a plasticizer such as any polyalkylene glycol diester of benzoic acid, and fillers such as calcium carbonate, magnesium carbonate, glass spheres, graphite, carbon black, carbon fiber, glass fiber, talc, wollastonite, mica, alumina, silica, kaolin, whisker, and silicon carbide.

<Method for manufacturing three-dimensional object>

The method for manufacturing a three-dimensional object of the present embodiment is a method for manufacturing a three-dimensional object by fused deposition modeling, and includes a step of obtaining a precursor of a three-dimensional object containing the three-dimensional object and a support material, and a support material removing step of making the precursor of the three-dimensional object contact a neutral water to remove the support material. The material of the support material is the soluble material for three-dimensional modeling. The method for manufacturing a three-dimensional object can makes it possible to restrain a support material from being foamed even when this method is used to produce a three-dimensional object, using a 3D printer after the support material is exposed to a high humidity, so that the three-dimensional object can be restrained from being lowered in precision, and makes it possible to remove the support material, and is large in dissolution rate in any neutral water, speedily from a precursor of the three-dimensional object without using any aqueous strong alkaline solution. The reason why the method for manufacturing a three-dimensional object exhibits such an effect is not clear; however, the reason is presumably the same as the reason why the soluble material for three-dimensional modeling exhibits the effect.

[Step of obtaining precursor of three-dimensional object containing three-dimensional object and support material]

As the step of obtaining a precursor of a three-dimensional object containing the three-dimensional object and the support material, a step of obtaining a precursor of a three-dimensional object containing the three-dimensional object and the support material of a known method for manufacturing a three-dimensional object with a fused deposition modeling type 3D printer can be used, except that the material of the support material is the soluble material for three-dimensional modeling.

The modeling material that is a material of the three-dimensional object is not particularly limited as long as the modeling material is a resin that can be used as a modeling material in the method for manufacturing a three-dimensional object of a conventional FDM system. Examples of the modeling material include thermoplastic resins such as an ABS resin, a polylactate resin, a polycarbonate resin, 12-nylon, 6,6-nylon, 6-nylon, a polyphenylsulfone resin, polyetheretherketone, and polyetherimide. Among these, from a viewpoint of the modeling property by a 3D printer, an ABS resin and/or a polylactate resin are more preferable, and an ABS resin is further preferable.

[Support material removing step of making precursor of three-dimensional object contact the neutral water to remove support material]

The precursor of the three-dimensional object is made to contact a neutral water to remove the support material in the support material removing step. The method of making the precursor of the three-dimensional object contact the neutral water is preferably a method of soaking the precursor of the three-dimensional object in the neutral water from the viewpoints of cost and ease of work. From the viewpoint of improving removability of the support material, the precursor of the three-dimensional object is irradiated with ultrasonic waves while being soaked in the neutral water to promote dissolution of the support material.

[Neutral Water]

Examples of the neutral water include ion exchange water, pure water, tap water, and industrial water. From the viewpoint of economy, ion exchange water and tap water are preferred. The neutral water may contain a water-soluble organic solvent as far as the solvent does not damage the resultant modeled three-dimensional object. Examples of the water-soluble organic solvent include lower alcohols such as methanol, ethanol, and 2-propanol; glycol ethers such as propylene glycol monomethyl ether, ethylene glycol monoethyl ether, ethylene glycol mono-t-butyl ether, and diethylene glycol monobutyl ether; and ketones such as acetone, and methyl ethyl ketone. When the neutral water contains the water-soluble organic solvent, the content of the water-soluble organic solvent in the neutral water is preferably 0.1% or more by mass, more preferably 0.5% or more by mass, even more preferably 1% or more by mass, even more preferably 3% or more by mass, and is preferably 50% or less by mass, more preferably 40% or less by mass, further preferably 30% or less by mass, further more preferably 20% or less by mass.

The amount of the neutral water used is preferably 10 mass times or more, and more preferably 20 mass times or more the support material from the viewpoint of the solubility of the support material. The amount of the neutral water used is preferably 10,000 mass times or less, more preferably 5,000 mass times or less, further preferably 1,000 mass times or less, and further preferably 100 mass times or less the support material from the economic viewpoint.

The period over which the soluble material for three-dimensional modeling is caused to contact the neutral water is preferably 5 minutes or longer from the viewpoint of the removability of the support material, and is preferably 180 minutes or shorter, more preferably 120 minutes or shorter, even more preferably 90 minutes or shorter from the viewpoint of economy, and a decrease of damage which the three-dimensional object suffers through the contact of the object with the neutral water over a long period. The washing temperature, which depends on the species of the modeling material, is preferably 15°C or higher, more preferably 25°C or higher, even more preferably 30°C or higher, even more

preferably 40°C or higher from the viewpoint of economy, the removability of the support material, and a decrease of damage which the three-dimensional object suffers. From the same viewpoint, the temperature is preferably 85°C or lower, more preferably 70°C or lower.

<Support material>

The support material of the present embodiment is a support material for supporting a three-dimensional object when the three-dimensional object is produced using a 3D printer of a fused deposition modeling system. The support material comprises the polyamide resin. The support material can be restrained from being foamed even when this support material is used to produce a three-dimensional object, using a 3D printer after the support material is exposed to a high humidity, so that the three-dimensional object can be restrained from being lowered in precision. The support material is large in dissolution rate in any neutral water to be removable speedily from a precursor of the three-dimensional object without using any aqueous strong alkaline solution. The reason why the support material exhibits such an effect is not clear; however, the reason is presumably the same as the reason why the soluble material for three-dimensional modeling exhibits the effect.

With respect to the above-described embodiment, the present description further discloses the following composition and manufacturing method.

<1> A soluble material for three-dimensional modeling that is used as a material of a support material that supports a three-dimensional object when manufacturing the three-dimensional object with a 3D printer of a fused deposition modeling system, wherein
the soluble material for three-dimensional modeling contains a polyamide resin,
the polyamide resin has a hydrophilic monomer unit A having a hydrophilic group, a hydrophobic dicarboxylic acid monomer unit B, and a hydrophobic diamine monomer unit C, and
a ratio of an amount of the hydrophilic monomer unit A to a total amount of monomer units in the polyamide resin is 2.5 mol% or more and less than 13.5 mol%.

<2> The soluble material for three-dimensional modeling according to <1>, wherein the hydrophilic group contains at least one type selected from the group consisting of a primary amino group, a secondary amino group, a tertiary amino group, a quaternary ammonium base, an oxyethylene group, a hydroxyl group, a carboxyl group, a carboxyl base, a phosphoric acid group, a phosphate group, a sulfonic acid group, and a sulfonate group.

<3> The soluble material for three-dimensional modeling according to <2>, wherein the secondary amino group is preferably at least one type selected from the group consisting of a secondary amino group represented by $-NHR^1$ ($R^1$ represents a straight chain or branched alkyl group having 1 to 14 carbon atoms) and a secondary amino group represented by -NH-.

<4> The soluble material for three-dimensional modeling according to <2> or <3>, wherein the tertiary amino group is preferably at least one type selected from the group consisting of a tertiary amino group represented by $-NR^2R^3$ ($R^2$ represents a straight chain or branched alkyl group having 1 to 4 carbon atoms and $R^3$ represents a straight chain or branched alkyl group having 1 to 14 carbon atoms) and a tertiary amino group represented by $-NR^4-$ ($R^4$ represents a straight chain or branched alkyl group having 1 to 4 carbon atoms).

<5> The soluble material for three-dimensional modeling according to any one of <2> to <4>, wherein the quaternary ammonium salt group is preferably at least one type selected from the group consisting of a quaternary ammonium salt group represented by $-N^+\{R^5R^6R^7\} \cdot X^-$ (Each of $R^5$, $R^6$, and $R^7$ represents a hydrogen atom or an alkyl group having 1 to 14 carbon atoms and $X^-$ represents a hydroxy ion, a halogen ion, $CH_3SO_4^-$, or $CH_3CH_2SO_4^-$).

<6> The soluble material for three-dimensional modeling according to any one of <2> to <5>, wherein the oxyethylene group is preferably at least one type selected from the group consisting of an oxyethylene group represented by $-\{CH_2CH_2O\}_n-$ (n represents an average number and it is an integer of 1 to 2,500, preferably 2 to 1,000, more preferably 3 to 100, and further preferably 4 to 50) and an oxyethylene group represented by $-\{CH_2CH_2O\}_m-R^8$ (m represents an average number and it is an integer of 1 to 2,500, preferably 2 to 1,000, more preferably 3 to 100, and further preferably 4 to 50. $R^8$ represents a hydrogen atom or a straight chain or branched alkyl group having 1 to 10 carbon atoms and it is more preferably 2 to 6 and further preferably 3 to 5).

<7> The soluble material for three-dimensional modeling according to any one of <2> to <6>, wherein the carboxyl salt group is preferably a carboxyl salt group represented by $-COOM^1$ ($M^1$ represents a counterion of a carboxyl group constituting the carboxyl salt group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

<8> The soluble material for three-dimensional modeling according to any one of <2> to <7>, wherein the phosphate group is preferably at least one type selected from the group consisting of a phosphate group represented by $-PO_4M^2{}_2$, $-PO_4HM^2$, and $-PO_4M^2$ ($M^2$ represents a counterion of a phosphoric acid group constituting the phosphate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

<9> The soluble material for three-dimensional modeling according to any one of <2> to <8>, wherein the sulfonate group is preferably a sulfonate group represented by $-SO_3M^3$ ($M^3$ represents a counterion of a sulfonic acid group constituting the sulfonate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

<10> The soluble material for three-dimensional modeling according to any one of <1> to <9>, wherein a monomer A for deriving the hydrophilic monomer unit A is preferably at least one type selected from the group consisting of carboxylic acid, amine, and amino acid, and more preferably carboxylic acid.

<11> The soluble material for three-dimensional modeling according to <10>, wherein carboxylic acid is preferably aromatic carboxylic acid; more preferably at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid; further preferably at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2,6-naphthalene dicarboxylic acid; further more preferably at least one type selected from the group consisting of 5-sulfoisophthalic acid and 2-sulfoterephthalic acid; further more preferably 5-sulfoisophthalic acid.

<12> The soluble material for three-dimensional modeling according to any one of <1> to <11>, wherein the content of the hydrophilic group in the polyamide resin is preferably 0.5 mmol/g or more, more preferably 0.6 mmol/g or more, and further preferably 0.7 mmol/g or more; preferably less than 1.0 mmol/g, more preferably 0.8 mmol/g or less, and further preferably 0.75 mmol/g or less.

<13> The soluble material for three-dimensional modeling according to any one of <1> to <12>, wherein the ratio of the amount of the hydrophilic monomer unit A to the total amount of monomer units in the polyamide resin is 2.5 mol% or more, preferably 4 mol% or more, more preferably 6 mol% or more, further preferably 8 mol% or more, and further more preferably 10 mol% or more; less than 13.5 mol%, preferably 11.5 mol% or less, more preferably 10.0 mol% or less, and further preferably 9.5 mol% or less.

<14> The soluble material for three-dimensional modeling according to any one of <1> to <13>, wherein a dicarboxylic acid B for deriving the hydrophobic dicarboxylic acid monomer unit B is preferably at least one type selected from the group consisting of aromatic dicarboxylic acid, aliphatic dicarboxylic acid, and alicyclic dicarboxylic acid; more preferably at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid; further preferably at least one type selected from the group consisting of terephthalic acid, 2,5-furan dicarboxylic acid, and 2,6-naphthalene dicarboxylic acid; further more preferably terephthalic acid.

<15> The soluble material for three-dimensional modeling according to any one of <1> to <14>, wherein the ratio of the amount of the hydrophobic dicarboxylic acid monomer unit B in the polyamide resin to the total amount of monomer units in the polyamide resin is preferably 10 mol% or more, more preferably 20 mol% or more, further preferably 30 mol% or more, further more preferably 35 mol% or more, especially preferably 40 mol% or more, and more especially preferably 42 mol% or more; preferably 47.5 mol% or less, more preferably 45 mol% or less, further preferably 42 mol% or less, and further more preferably 40 mol% or less; preferably 10 mol% to 47.5 mol%, more preferably 20 mol% to 45 mol%, and further preferably 30 mol% to 42 mol%.

<16> The soluble material for three-dimensional modeling according to any one of <1> to <15>, wherein the mole ratio of the hydrophilic monomer unit A to the hydrophobic dicarboxylic acid monomer unit B (hydrophilic monomer unit A / hydrophobic dicarboxylic acid monomer unit B) is preferably 10/90 or more, more preferably 15/85 or more, further preferably 18/82 or more, and further more preferably 20/80 or more; preferably less than 27/73, more preferably 25/75 or less, and further preferably 21/79 or less.

<17> The soluble material for three-dimensional modeling according to any one of <1> to <16>, wherein a diamine C for deriving the hydrophobic diamine monomer unit C is preferably at least one type selected from the group consisting of aliphatic diamine, alicyclic diamine, and aromatic diamine; more preferably aliphatic diamine.

<18> The soluble material for three-dimensional modeling according to any one of <1> to <17>, wherein the number of carbon atoms in the diamine C for deriving the hydrophobic diamine monomer unit C is preferably 2 or more, more preferably 3 or more, and further preferably 4 or more; preferably 20 or less, more preferably 15 or less, and further preferably 10 or less.

<19> The soluble material for three-dimensional modeling according to <17> or <18>, wherein the aliphatic diamine is preferably at least one type selected from the group consisting of ethylenediamine, trimethylenediamine, tetramethylenediamine, pentamethylenediamine, hexamethylenediamine, heptamethylenediamine, octamethylenediamine, nonanediamine, and decanediamine; more preferably hexamethylenediamine.

<20> The soluble material for three-dimensional modeling according to any one of <17> to <19>, wherein the alicyclic diamine is preferably at least one type selected from the group consisting of 4,4'-diamino-3,3'-dimethyldicyclohexylmethane, diamine cyclohexane, and isophoronediamine; more preferably at least one type selected from the group consisting of diaminecyclohexane and isophoronediamine, further preferably diaminecyclohexane.

<21> The soluble material for three-dimensional modeling according to any one of <17> to <20>, wherein the aromatic diamine is preferably at least one type selected from the group consisting of phenylene diamine, diethyltoluenediamine, and 4,4'-diaminophenylmethane; more preferably at least one type selected from the group consisting of phenylene diamine and diethyltoluenediamine; further preferably phenylenediamine.

<22> The soluble material for three-dimensional modeling according to any one of <1> to <21>, wherein the diamine C for deriving the hydrophobic diamine monomer unit C is preferably at least one type selected from the group consisting of hexamethylenediamine, diaminecyclohexane, and phenylenediamine; more preferably at least one type selected from the group consisting of hexamethylenediamine and phenylenediamine; and further preferably hexamethylene diamine.

<23> The soluble material for three-dimensional modeling according to any one of <1> to <22>, wherein if the diamine C for deriving the hydrophobic diamine monomer unit C is at least one type selected from the group consisting of hexamethylenediamine, diaminecyclohexane, and phenylenediamine; the ratio of the total amount of hexamethylenediamine, diaminecyclohexane, and phenylenediamine to the total amount of all diamine monomer units in the polyamide resin is preferably 50 mol% or more, more preferably 70 mol% or more, further preferably 80 mol% or more, further more preferably 90 mol% or more, especially preferably substantially 100 mol%, and more especially preferably 100 mol%.

<24> The soluble material for three-dimensional modeling according to any one of <1> to <23>, wherein the polyamide resin is preferably at least one type selected from the group consisting of the following formulas (1) to (6).

[Formula 7]

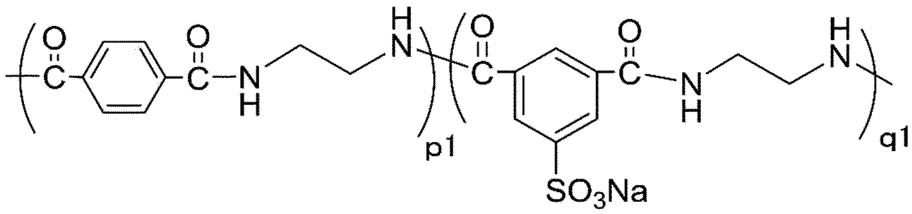

(1)

(In the formula (1), p1 and q1 represent the number-average degree of polymerization respectively. The polymer may be a block copolymer or a random copolymer; and from a viewpoint of the solubility into neutral water, the polymer is preferably a random copolymer.)

[Formula 8]

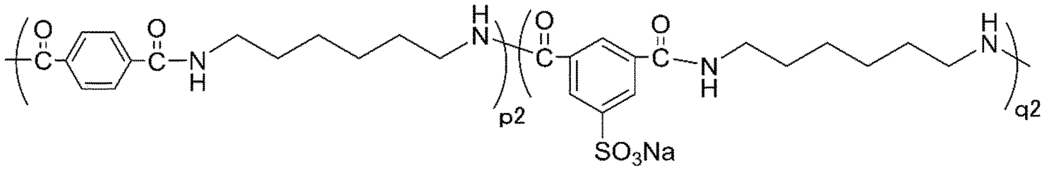

(2)

(In the formula (2), p2 and q2 represent the number-average degree of polymerization respectively. The polymer may be a block copolymer or a random copolymer; and from a viewpoint of the solubility into neutral water, the

polymer is preferably a random copolymer.)

[Formula 9]

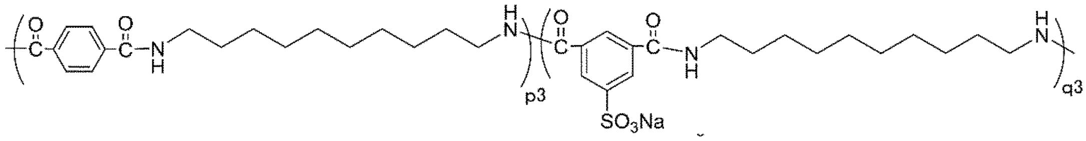

(3)

(In the formula (3), p3 and q3 represent the number-average degree of polymerization respectively. The polymer may be a block copolymer or a random copolymer; and from a viewpoint of the solubility into neutral water, the polymer is preferably a random copolymer.)

[Formula 10]

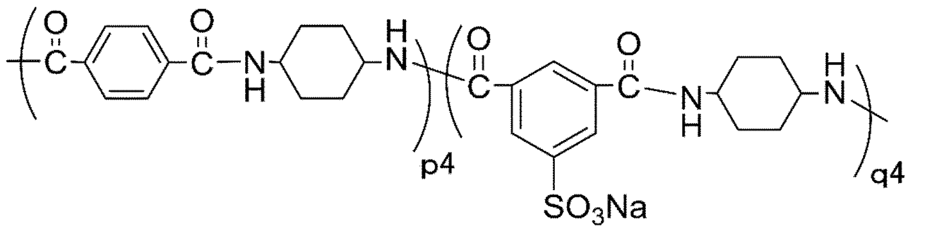

(4)

(In the formula (4), p4 and q4 represent the number-average degree of polymerization respectively. The polymer may be a block copolymer or a random copolymer; and from a viewpoint of the solubility into neutral water, the polymer is preferably a random copolymer.)

[Formula 11]

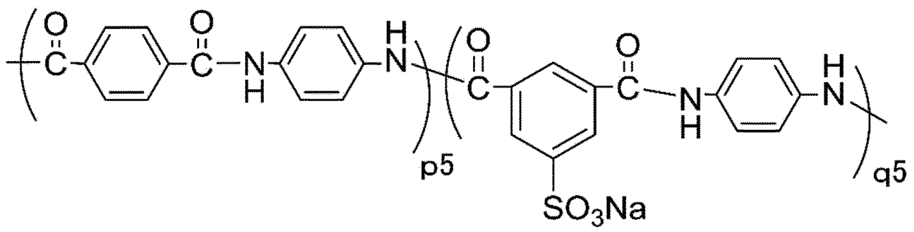

(5)

(In the formula (5), p5 and q5 represent the number-average degree of polymerization respectively. The polymer may be a block copolymer or a random copolymer; and from a viewpoint of the solubility into neutral water, the polymer is preferably a random copolymer.)

[Formula 12]

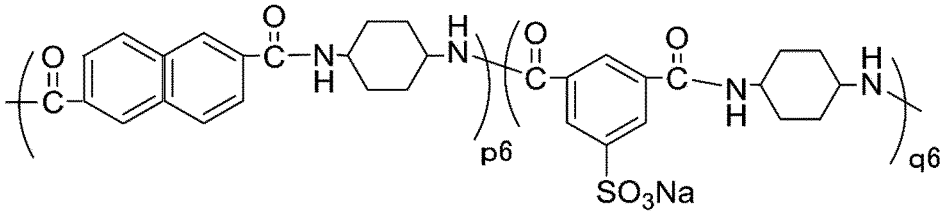

(6)

(In the formula (6), p6 and q6 represent the number-average degree of polymerization respectively. The polymer may be a block copolymer or a random copolymer; and from a viewpoint of the solubility into neutral water, the

polymer is preferably a random copolymer.)

<25> The soluble material for three-dimensional modeling according to any one of <1> to <24>, wherein the weight average molecular weight of the polyamide resin is preferably 3,000 or more, more preferably 3,500 or more, further preferably 4,000 or more; preferably 70,000 or less, more preferably 50,000 or less, further preferably 30,000 or less, and further more preferably 20,000 or less.

<26> The soluble material for three-dimensional modeling according to any one of <1> to <25>, wherein the glass transition temperature of the polyamide resin is preferably 50°C or higher, more preferably 60°C or higher, further preferably 70°C or higher, and further more preferably 80°C or higher; preferably 250°C or lower, and more preferably 220°C or lower.

<27> The soluble material for three-dimensional modeling according to any one of <1> to <26>, wherein the content of the polyamide resin in the soluble material for three-dimensional modeling is preferably 30% by mass or more, more preferably 50% by mass or more, further preferably 60% by mass or more, even more preferably 70% by mass or more, even more preferably 80% by mass or more, even more preferably 90% by mass or more, even more preferably 95% by mass or more, even more preferably substantially 100% by mass, and even more preferably 100% by mass.

<28> The soluble material for three-dimensional modeling according to any one of <1> to <27>, wherein the glass transition temperature of the soluble material for three-dimensional modeling is preferably 50°C or higher, more preferably 60°C or higher, further preferably 70°C or higher, and further more preferably 80°C or higher; preferably 250°C or lower, and more preferably 220°C or lower.

<29> The soluble material for three-dimensional modeling according to any one of <1> to <28>, wherein the form of the soluble material for three-dimensional modeling is preferably at least one type selected from the group consisting of a pellet, powder, and a filament; more preferably a filament.

<30> The soluble material for three-dimensional modeling according to any one of <1> to <29>, wherein the diameter of the filament is preferably 0.5 mm or more, and more preferably 1.0 mm or more; from the same viewpoints, the diameter of the filament is preferably 3.0 mm or less, more preferably 2.0 mm or less, and further preferably 1.8 mm or less.

<31> A method for manufacturing a three-dimensional object by fused deposition modeling, including a step of obtaining a precursor of a three-dimensional object containing the three-dimensional object and a support material, and a support material removing step of making the precursor of the three-dimensional object contact a neutral water to remove the support material, wherein the material of the support material is the soluble material for three-dimensional modeling according to any one of <1> to <30>.

<32> The method for manufacturing a three-dimensional object according to <31>, wherein a modeling material as a material for the three-dimensional object is preferably at least one member selected from the group consisting of an ABS resin, a polylactate resin, a polycarbonate resin, 12-nylon, 6,6-nylon, 6-nylon, a polyphenylsulfone resin, polyetheretherketone, and polyetherimide; more preferably an ABS resin and/or a polylactic resin; and further preferably an ABS resin.

<33> The method for manufacturing a three-dimensional object according to <31> or <32>, comprising the support material removing step that is a support material removing step of immersing the precursor of the three-dimensional object in the neutral water to dissolve the support material.

<34> The method for manufacturing a three-dimensional object according to <33>, wherein the neutral water contains a water-soluble organic solvent.

<35> The method for manufacturing a three-dimensional object according to <34>, wherein the water-soluble organic solvent is at least one selected from the group consisting of lower alcohols such as methanol, ethanol, and 2-propanol; glycol ethers such as propylene glycol monomethyl ether, ethylene glycol monoethyl ether, ethylene glycol mono-t-butyl ether, and diethylene glycol monobutyl ether; and ketones such as acetone, and methyl ethyl ketone.

<36> The method for manufacturing a three-dimensional object according to <34> to <35>, wherein the content of the water-soluble organic solvent in the neutral water is preferably 0.1% or more by mass, more preferably 0.5% or more by mass, even more preferably 1% or more by mass, even more preferably 3% or more by mass; and is preferably 50% or less by mass, preferably 40% or less by mass, preferably 30% or less by mass, preferably 20% or less by mass.

<37> The method for manufacturing a three-dimensional object according to any one of <34> to <36>, wherein the amount of the neutral water used is preferably 10 mass times or more, and more preferably 20 mass times or more, preferably 10,000 mass times or less, more preferably 5,000 mass times or less, further preferably 1,000 mass times or less, and further preferably 100 mass times or less the support material.

<38> A support material that supports a three-dimensional object when manufacturing the three-dimensional object with a 3D printer of a fused deposition modeling system, wherein the support material contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of hydrophilic monomer unit

A to a total amount of monomer units in the polyamide resin is 2.5 mol% or more and less than 13.5 mol%.
<39> The support material according to <38>, wherein the polyamide resin is a polyamide resin which is used for the soluble material for three-dimensional modeling according to any one of <1> to <30>
<40> Use of the soluble material for three-dimensional modeling according to any one of <1> to <30> as a material of the support material.

<Analysis Method>

[Hydrophilic Monomer Composition, Hydrophobic Dicarboxylic Acid Composition, and Hydrophobic Diamine Composition in Polyamide Resin]

The composition of the hydrophilic monomer unit, the composition of the hydrophobic dicarboxylic acid monomer unit, and the composition of the hydrophobic diamine monomer unit were obtained by proton NMR measurement using NMR "MR400" manufactured by Agilent Technologies, Inc.

[Amount of Hydrophilic Monomer in Polyamide Resin]

The amount of the hydrophilic monomer (mmol/g) in the polyamide resin was calculated from the composition of the hydrophilic monomer unit obtained with the above described analysis method by using the following formula. However, it was assumed that the number of moles of all the dicarboxylic acid monomer unit is equal to the number of moles of all the amine monomer unit.

$$\text{Amount of Hydrophilic Monomer (mmol/g)} = A \times 1000 / (A \times M_s + B \times M_c + C \times M_a - 2 \times 18.0 \times 50)$$

A: Ratio of hydrophilic monomer (mol%)
B: Ratio of hydrophobic dicarboxylic acid monomer (mol%)
C: Ratio of hydrophobic diamine monomer (mol%)
Ms: Molecular weight of hydrophilic monomer
Mc: Molecular weight of hydrophobic dicarboxylic acid monomer besides hydrophilic monomer (number average molecular weight if there are several types of dicarboxylic acid)
Ma: Molecular weight of hydrophobic diamine monomer besides hydrophilic monomer (number average molecular weight if there are several types of diamine)

[Amount of Hydrophilic Group in Polyamide Resin]

The amount of the hydrophilic group in the polyamide resin (unit: mmol/g) was obtained from the composition of the polyamide resin obtained with the above-described method.

[Weight Average Molecular Weight and Molecular Weight Distribution of Polyamide Resin]

10 mg of the polyamide resin was dissolved into 3 g of HFIP (1,1,1,3,3,3-hexafluoro-2-propanol manufactured by Wako Pure Chemical Corporation) for 8 hours and gel permeation chromatography (GPC) was performed in the following conditions.
Measurement apparatus: HLC-8320GPC (manufactured by TOSOH Corporation)
Eluent: HFIP / 0.5 mM sodium trifluoroacetate
Flow: 0.2 mL/min
Measurement temperature: 40°C
Column for analysis: TSK-Gel Super AWM-H (TOSOH Corporation)
Calibration curve: Shodex STANDARD M-75
Reference material: polymethylmethacrylate (PMMA)

[Glass Transition Temperature of Polyamide Resin]

5 mg to 10 mg of a sample was weighed and sealed in an aluminum pan. By using a differential scanning calorimeter (DSC) ("DSC7020" manufactured by Seiko Instruments Inc.), the temperature of the aluminum pan with the

sample was increased from 30°C to 350°C at 10°C/min and the heated aluminum pan with the sample was rapidly cooled to 30°C. Then, the temperature of the aluminum pan with the sample was increased again to 350°C at 10°C/min to obtain a DSC curve. The glass transition temperature (°C), the melting point (°C), and the crystallization temperature (°C) were obtained from the DSC curve.

<Synthesis of Polyamide Resin>

[Synthesis Example 1] (Compound 1)

1.66 g of terephthalic acid, 4.36 g of sodium 5-sulfoisophthalate, 3.05 g of hexamethylene diamine, 5.31 g of 4-methylmorpholine, and 50 g of N-methylpyrrolidone were prepared in a 100-mL glass reactor equipped with a thermometer and a stirring blade. The temperature was decreased to 0°C. Then, 16.7 g of 4-(4,6-dimethoxy-1,3,5-triazine-2-yl)-4-methylmorpholinium chloride was added, the temperature was kept at 0°C, and the mixture was continuously stirred at atmosphere for 6 hours. After stirring, the mixture was poured to a DMF / methanol mixed solution to precipitate a polymer. The polymer was filtered and dried at 60°C with a reduced pressure to obtain a white solid (Compound 1).

[Synthesis Example 2] (Compound 2)

A compound 2 was obtained in the same way as the synthesis example 1 except the amount of terephthalic acid was changed to 2.49 g, the amount of sodium 5-sulfoisophthalate was changed to 3.11 g, the amount of hexamethylene diamine was changed to 3.09 g, the amount of 4-methylmorpholine was changed to 5.38 g, and the amount of 4-(4,6-dimethoxy-1,3,5-triazine-2-yl)-4-methylmorpholinium chloride was changed to 16.9 g.

[Synthesis Example 3] (Compound 3)

A compound 3 was obtained in the same way as the synthesis example 1 except the amount of terephthalic acid was changed to 3.32 g, the amount of sodium 5-sulfoisophthalate was changed to 2.03 g, the amount of hexamethylene diamine was changed to 3.20 g, the amount of 4-methylmorpholine was changed to 5.58 g, and the amount of 4-(4,6-dimethoxy-1,3,5-triazine-2-yl)-4-methylmorpholinium chloride was changed to 17.5 g.

[Synthesis Example 4] (Compound 4)

A compound 4 was obtained in the same way as the synthesis example 1 except the amount of terephthalic acid was changed to 2.41 g, the amount of sodium 5-sulfoisophthalate was changed to 1.46 g, the amount of hexamethylene diamine was changed to 2.32 g, the amount of 4-methylmorpholine was changed to 4.04 g, and the amount of 4-(4,6-dimethoxy-1,3,5-triazine-2-yl)-4-methylmorpholinium chloride was changed to 13.8 g.

[Synthesis Example 5] (Compound 5)

A compound 5 was obtained in the same way as the synthesis example 1 except the amount of terephthalic acid was changed to 1.16 g, the amount of isophthalic acid was changed to 1.16 g, the amount of sodium 5-sulfoisophthalate was changed to 1.61 g, the amount of hexamethylene diamine was changed to 2.32 g, the amount of 4-methylmorpholine was changed to 4.04 g, and the amount of 4-(4,6-dimethoxy-1,3,5-triazine-2-yl)-4-methylmorpholinium chloride was changed to 13.8 g.

The composition of dicarboxylic acid, the composition of diol, the amount of the sulfonate group, the weight average molecular weight ($M_w$), the glass transition temperature (°C), the melting point (°C), and the crystallization temperature (°C) were obtained for each of the polyamide compounds 1 to 5 obtained in Synthesis Examples 1 to 5 with the above-described analysis methods. The measurement results are shown in Table 1. In Table 1, SIP (mol%) is the ratio of the amount of the 5-sulfoisophthalate monomer unit in the total amount of the dicarboxylic acid monomer unit, TPA (mol%) is the ratio of the amount of the terephthalic acid monomer unit in the total amount of the dicarboxylic acid monomer unit, IPA (mol%) is the ratio of the amount of the isophthalic acid monomer unit in the total amount of the dicarboxylic acid monomer unit, HMDA (mol%) is the ratio of the amount of the hexamethylene diamine monomer unit in the total amount of the diamine monomer unit, and the amount of sulfonic acid group (mmol/g) is the amount (mmol/g) of sulfonate group in polyamide. In Table 1, $T_g$ means the glass transition temperature and $T_c$ means the crystallization temperature.

<Examples and Comparative Examples>

[Performance Evaluation Method]

[Solubility into Neutral Water]

Each of the compounds was ground (grinding time was 120 seconds) by a coffee mill ("Mini Blender" manufactured by Osaka Chemical Co., Ltd.) into polymer powder. 0. 25 g of the polymer powder was dispersed into 5g of ion exchanged water (pH 7) at 70°C and the dispersion was left to stand for 10 minutes. The polymer left undissolved was filtered at a reduced pressure (a filter paper No. 2/70mm manufactured by Advantec Co. Ltd.), the filtered polymer was washed with a small amount of ion exchanged water and dried. The dry mass of the undissolved polymer was measured and the dissolution rate was calculated using the following formula.

Dissolution Ratio (%) = (Mass of Polymer before Dissolution - Mass of Polymer undissolved) / Mass of Polymer before Dissolution × 100

[Moisture Absorption]

Approximately 2 g of the polymer powder obtained by pulverization in the same manner as described above is vacuum-dried at 80°C for 3 hours, and then the polymer powder is precisely weighed into a petri dish. The dish is allowed to stand still in a thermostat of 25°C temperature and 98% RH. After 24 hours, the mass of the powder is measured, and the moisture absorption thereof is calculated out in accordance with the following equation:

Moisture absorption (%) = (“polymer mass after the still standing” - “polymer mass before the still standing”) /“polymer mass before the still standing” × 100

[Foaming by Heat]

About 2 g of the polymer powder ground in the same method as described above was dried in vacuum at 80°C for 3 hours. The dried powder was weighed on a petri dish and left at 25°C in a constant humidity tank of 98%RH for 24 hours. Then, the petri dish was placed on a hot plate ("ND-1" manufactured by AS ONE Corporation) at 280°C and the presence or absence of foaming was observed.

[Examples 1 to 3 and Comparative Examples 1 to 5]

The solubility into neutral water and the moisture absorption were evaluated with the above-described analysis method for each of the polyamide compounds 1 to 5 obtained in the synthesis examples and the commercially available support materials 1 to 3 described below. The analysis results are shown in Table 1. The commercially available products 1 to 3 in Table 1 are as described below.

Commercially Available Product 1: Soluble Support Material SR-30 (registered trademark), copolymer of methacrylic acid / styrene / butylmethacrylate (45% by weight / 34% by weight / 21% by weight, manufactured by Stratasys Ltd., composition analyzed by proton NMR (DMSO-d6), weight average molecular weight: 130,000, glass transition temperature: 113°C, additive: epoxy group-containing polymer)
Commercially Available Product 2: Natural PVA / 1.75 mm polyvinyl alcohol (manufactured by baserCNS Inc., number average molecular weight: 30,000, glass transition temperature: 80°C)
Commercially Available Product 3: Soluble Support Material P400SR (registered trademark), copolymer of methacrylic acid / methylmethacrylate(55% by weight / 45% by weight, manufactured by Stratasys Ltd., composition analyzed by proton NMR (DMSO-d6), weight average molecular weight: 130,000, glass transition temperature: 100°C, plasticizer: containing triphenylphosphate, etc.)

[Table 1]

| | | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|---|
| | | | | Compound 1 | Compound 2 | Compound 3 | Commercial Product 1 | Commercial Product 2 | Commercial Product 3 | Compound 4 | Compound 5 |
| Composition | A | Dicarboxylic Acid | SIP (mol%) | 22 | 18 | 13 | - | - | - | 27 | 30 |
| | B | | TPA (mol%) | 78 | 82 | 87 | - | - | - | 73 | 35 |
| | D | | IPA (mol%) | - | - | - | - | - | - | - | 35 |
| | C | Diamine | HMDA (mol%) | 100 | 100 | 100 | - | - | - | 100 | 100 |
| Measurement | | Amount of Sulfonic Acid Group (mmol/g) | | 0.8 | 0.7 | 0.5 | - | - | - | 1.0 | 1.3 |
| | | Weight Average Molecular Weight (Mw) | | 4600 | 4500 | 4200 | 130000 | 30000 2) | 130000 | 5900 | 7200 |
| | | Heat Resistance | Tg (°C) | 153 | 146 | 144 | 117 | 85 | 100 | 159 | 142 |
| | | | Melting Point (°C) | N/A 1) | 289 | 294 | N/A 1) | 230 | N/A 1) | N/A 1) | N/A 1) |
| | | | Tc (°C) | N/A 1) | 226 | 262 | N/A 1) | 157 | N/A 1) | N/A 1) | N/A 1) |
| | | Solubility | Dissolution Rate (%) | 11 | 10 | 9 | 5 | 99 | 0 | 12 | 22 |
| | | Moisture Resistance | Moisture Absorption (%) | 18 | 14 | 11 | 3 | 31 | 4 | 20 | 23 |
| | | | Foaming by Heat | No Foaming | No Foaming | No Foaming | No Foaming | Foaming | No Foaming | Foaming | Foaming |

1) Not detected because the sample was an amorphous resin
2) Number average molecular weight

## Claims

1. A soluble material for three-dimensional modeling that is used as a material of a support material that supports a three-dimensional object when manufacturing the three-dimensional object with a 3D printer of a fused deposition modeling system, wherein
the soluble material for three-dimensional modeling contains a polyamide resin,
the polyamide resin has a hydrophilic monomer unit A having a hydrophilic group, a hydrophobic dicarboxylic acid monomer unit B, and a hydrophobic diamine monomer unit C, and
a ratio of an amount of the hydrophilic monomer unit A to a total amount of monomer units in the polyamide resin is 2.5 mol% or more and less than 13.5 mol%.

2. The soluble material for three-dimensional modeling according to claim 1, wherein the hydrophilic group contains at least one type selected from the group consisting of a primary amino group, a secondary amino group, a tertiary amino group, a quaternary ammonium base, an oxyethylene group, a hydroxyl group, a carboxyl group, a carboxyl base, a phosphoric acid group, a phosphate group, a sulfonic acid group, and a sulfonate group.

3. The soluble material for three-dimensional modeling according to claim 2, wherein a counter ion of the sulfonic acid group constituting the sulfonate group is at least one type selected from the group consisting of a sodium ion, a potassium ion, a lithium ion, a magnesium ion, a calcium ion, a barium ion, a zinc ion, and an ammonium ion.

4. The soluble material for three-dimensional modeling according to any one of claims 1 to 3, wherein a monomer A for deriving the hydrophilic monomer unit A is at least one type selected from the group consisting of 5-sulfoisophthalic acid and 2-sulfoterephthalic acid.

5. The soluble material for three-dimensional modeling according to any one of claims 1 to 4, wherein dicarboxylic acid B for deriving the hydrophobic dicarboxylic acid monomer unit B is at least one type selected from the group consisting of aromatic dicarboxylic acid and aliphatic dicarboxylic acid.

6. The soluble material for three-dimensional modeling according to any one of claims 1 to 5, wherein a content of the hydrophilic group in the polyamide resin is 0.5 mmol/g or more and less than 1.0 mmol/g.

7. The soluble material for three-dimensional modeling according to any one of claims 1 to 6, wherein a number of carbon atoms in diamine C for deriving the hydrophobic diamine monomer unit C is 2 to 20.

8. The soluble material for three-dimensional modeling according to any one of claims 1 to 7, wherein a weight average molecular weight of the polyamide resin is 3,000 to 70,000.

9. The soluble material for three-dimensional modeling according to any one of claims 1 to 8, wherein a form is a filament.

10. The soluble material for three-dimensional modeling according to claim 9, wherein a diameter of the filament is 0.5 mm to 3.0 mm.

11. A method for manufacturing a three-dimensional object with fused deposition modeling system having a step of obtaining a precursor of a three-dimensional object containing the three-dimensional object and a support material and a support material removing step of making the precursor of the three-dimensional object contact neutral water to remove the support material, wherein
a material of the support material is the soluble material for three-dimensional modeling according to any one of claims 1 to 10.

12. The method for manufacturing a three-dimensional object according to claim 11, comprising a support material removing step of soaking the precursor of the three-dimensional object in neutral water and dissolving the support material to remove the support material.

13. A support material that supports a three-dimensional object when manufacturing the three-dimensional object with a 3D printer of a fused deposition modeling system, wherein the support material contains a polyamide resin, the polyamide resin has a hydrophilic monomer unit A having a hydrophilic group, a hydrophobic dicarboxylic acid monomer unit B, and a hydrophobic diamine monomer unit C, and a ratio of an amount of hydrophilic monomer unit A to a total amount of monomer units in the polyamide resin is 2.5 mol% or more and less than 13.5 mol%.

## INTERNATIONAL SEARCH REPORT

International application No.
PCT/JP2017/026700

A. CLASSIFICATION OF SUBJECT MATTER
*C08G69/26*(2006.01)i, *B29C67/00*(2017.01)i, *B33Y10/00*(2015.01)i, *B33Y70/00*(2015.01)i

According to International Patent Classification (IPC) or to both national classification and IPC

B. FIELDS SEARCHED

Minimum documentation searched (classification system followed by classification symbols)
C08G69, C08L, B29C67/00, B33Y10/00, B33Y70/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| Y | JP 2016-78284 A (Kao Corp.), 16 May 2016 (16.05.2016), claims; paragraphs [0087], [0097], [0098], [0105] & US 2017/0232684 A1 claims; paragraphs [0091], [0101], [0102], [0108], [0109] & WO 2016/059986 A1 & EP 3208074 A1 & CN 105992688 A | 1-13 |
| Y | JP 57-167339 A (Unitika Ltd.), 15 October 1982 (15.10.1982), claims; page 2 (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 October 2017 (02.10.17) | 10 October 2017 (10.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2017/026700

C (Continuation). DOCUMENTS CONSIDERED TO BE RELEVANT

| Category* | Citation of document, with indication, where appropriate, of the relevant passages | Relevant to claim No. |
|---|---|---|
| Y | JP 50-92996 A (Unitika Ltd.),<br>24 July 1975 (24.07.1975),<br>claims; page 2, upper left column to page 3, upper left column<br>(Family: none) | 1-13 |
| Y | JP 5-210241 A (Toray Industries, Inc.),<br>20 August 1993 (20.08.1993),<br>claims; example 4<br>(Family: none) | 1-13 |
| Y | JP 7-258407 A (Tomoegawa Paper Co., Ltd.),<br>09 October 1995 (09.10.1995),<br>claims; paragraphs [0007], [0008]<br>(Family: none) | 1-13 |
| Y | JP 2010-159414 A (EMG-Patent AG),<br>22 July 2010 (22.07.2010),<br>claims<br>& US 2010/0159175 A1<br>claims<br>& EP 2196494 A1 & KR 10-2010-0068210 A<br>& CN 101746769 A | 1-13 |
| Y | JP 2007-231087 A (Toray Industries, Inc.),<br>13 September 2007 (13.09.2007),<br>claims; paragraphs [0022] to [0024]<br>(Family: none) | 1-13 |
| A | JP 2011-518938 A (Arkema France),<br>30 June 2011 (30.06.2011),<br>claim 16; paragraph [0041]<br>& US 2011/0172387 A1<br>claim 17; paragraph [0053]<br>& WO 2009/138692 A2 & EP 2274363 A1<br>& FR 2930555 A & KR 10-2011-0009191 A<br>& CN 102015842 A | 1-13 |
| A | JP 2015-519456 A (Rhodia Operations),<br>09 July 2015 (09.07.2015),<br>claims; paragraphs [0001], [0045]<br>& US 2015/0152233 A1<br>claims; paragraphs [0001], [0094]<br>& WO 2013/186120 A1 & EP 2858809 A1<br>& CN 104487230 A & KR 10-2015-0023668 A | 1-13 |
| A | JP 2016-501136 A (Evonik Industries AG),<br>18 January 2016 (18.01.2016),<br>claims<br>& US 2014/0134334 A1<br>claims<br>& WO 2014/072147 A1 & EP 2917026 A1<br>& CN 104870171 A | 1-13 |

Form PCT/ISA/210 (continuation of second sheet) (January 2015)

**INTERNATIONAL SEARCH REPORT**

International application No. PCT/JP2017/026700

C (Continuation). DOCUMENTS CONSIDERED TO BE RELEVANT

| Category* | Citation of document, with indication, where appropriate, of the relevant passages | Relevant to claim No. |
|---|---|---|
| P,A | WO 2016/125860 A1 (Kao Corp.), 11 August 2016 (11.08.2016), claims & CA 2974719 A & AU 2016216355 A | 1-13 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012509777 T
- JP 2012509777 A
- JP 2002516346 A